# EUROPEAN PATENT APPLICATION

(11) **EP 1 600 325 A2**
(43) Date of publication of application: **30.11.2005**
(21) Application number: 05104013.7
(22) Date of filing: 13.05.2005
(51) Int. Cl.: B60N 2/28, B60N 2/06

(54) **System for anchoring a child safety seat to a vehicle seat**

(30) Priority: 14.05.2004 IT TO20040322
(71) Applicant: SABELT S.p.A., 10129 Torino (IT)
(72) Inventor: BorhiI, Antonello, 10092 Beinasco (IT)
(74) Representative: Jorio, Paolo

(57) **Abstract**

The coupling system (5) comprises at least one first member (6) on which a second member (7) is slidable, step-adjusting means (26, 37a, 37b) for the position of the second member (7) on the first member (6) and a release device (46, 56) carried by the second member (7) and operable to release the second member (7) from the first member (6). The adjustment means comprise a serrated edge (26) with saw teeth (25) and two step members (27a, 27b). The coupling system (5) also comprises two end-of-stroke stops (61, 66) adapted to be engaged by the step members (27a, 27b) and arranged so as to allow the step members (27a, 27b) also as to prevent the backward movement of the second member (7). The coupling system (5) is applied to a system for anchoring a child safety seat (9), adapted to be anchored to the motor vehicle fixed members (18).

## Description

The present invention relates to a system for coupling in a step-slidable manner two members of a system for anchoring a child safety seat to a motor vehicle seat. The invention also relates to a system for anchoring a child safety seat to a motor vehicle seat and a child safety seat provided with said anchoring system.

Various step coupling systems between a first member and a second member, in which the position along the first member is adjustable, for example by means of a serrated device, are known. These devices generally do not allow locking of the second member in end-of-stroke positions, and therefore present the risk that the second member is either not firmly positioned in such positions or may even disengage from the first member.

It is the object of the present invention to provide an adjustable step coupling system which is very reliable and cost-effective, and obviates the drawbacks of coupling systems of the known art.

According to the present invention, a system for coupling in a step-slidable manner two members of a system for anchoring a child safety seat to a motor vehicle seat is provided, as defined in claim 1.

According to the present invention, it is also provided a system for anchoring a child safety seat to a motor vehicle seat, as defined in claim 17.

Finally, according to the invention it is provided a child safety seat, as defined in claim 20.

For a better understanding of the present invention, it will now be described a preferred embodiment only by way of example, and with reference to the accompanying drawings, in which:
Figure 1 is a side view of a system for anchoring a child safety seat to a motor vehicle seat incorporating the coupling system according to the present invention;
Figure 2 is a top view of the coupling system of Figure 1;
Figure 3 is a partial top view of a detail in Figure 2, on a magnified scale;
Figure 4 is a section taken along the line IV-IV in Figure 3;
Figure 5 is a section taken along the line V-V in Figure 3, in home position;
Figure 6 is a section taken along the line VI-VI in Figure 3, in home position;
Figure 7 is the section of Figure 6 in a working position;
Figure 8 is a section taken along line VIII-VIII in Figure 3, in home position;
Figure 9 is the section of Figure 8 in a working position;
Figures 10 and 11 are the sections of Figures 6 and 7 in an end-of-stroke position.

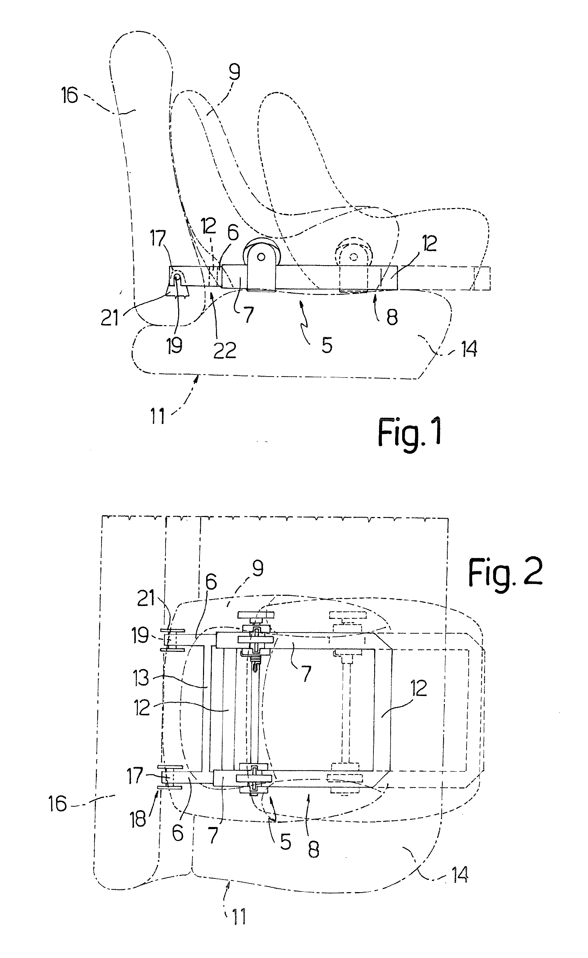

With reference to Figures 1 and 2, numeral 5 generically designates a system for coupling in a step-slidable manner a first member, for example a guide formed by a bar 6, and a second member, for example a slide 7 movable along the bar 6. The coupling system 5 is particularly suitable for an anchoring support 8 of a child safety seat 9, shown with dashed lines in Figures 1 and 2 and commonly known as ISOFIX. Support 8 is anchored onto a motor vehicle seat, shown with dashed and dotted lines in Figures 1 and 2, for example the rear seat 11, as shown in greater detail below. Hereinafter, the terms "front" and "rear" will refer to the travel direction of the motor vehicle.

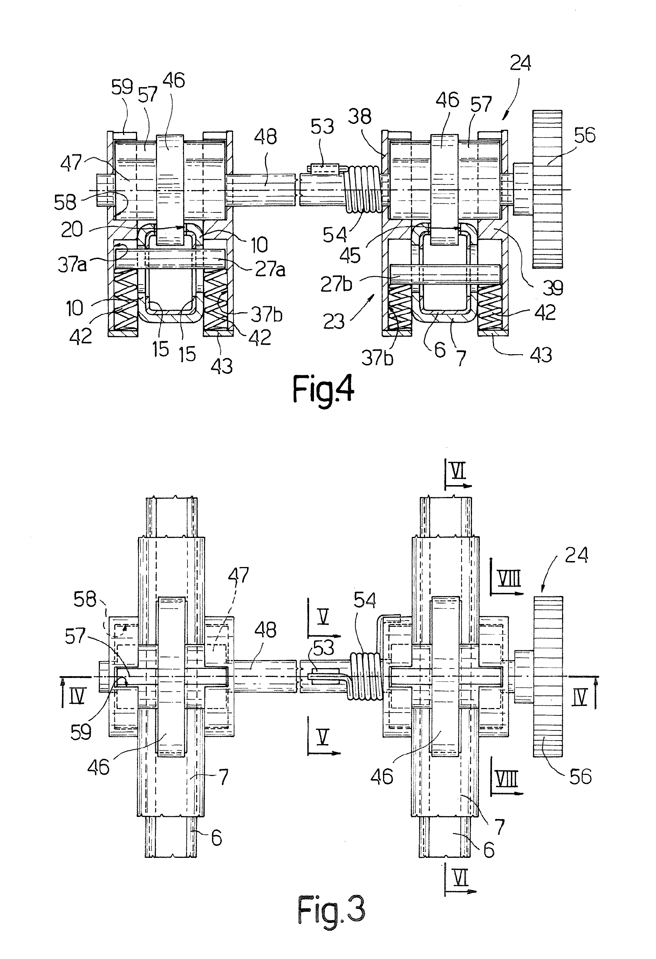

In particular, the support 8 is formed by two parallel slides 7, each formed by a rectangular section (see also Figure 4) with two parallel and vertical walls 10. The two sections of the slides 7 are connected together by two crosspieces 12.

The bar 6 is formed by another rectangular section with two parallel and vertical walls 15 and a third wall provided with a longitudinal groove 20. Each bar 6 is arranged inside the section of the corresponding slide 7 and is slidingly engaged therewith. The two bars 6 are reciprocally connected by another crosspiece 13.

The child safety seat 9 is fastened to the support 8 in any known way, and is connected to the fixed chassis of the motor vehicle by means of a anchoring device, so as to rest against both an usual cushion 14 of the seat 11 and against a respective backrest 16. For this purpose, each bar 6 presents a rear hook end 17, suitable for being anchored to a corresponding matching member 18, against both a longitudinal movement and an upwardly movement of the hook end 17. The fixed support 18 is formed by a pin 19 carried by two parallel plates 21 fastened to the motor vehicle chassis, in correspondence with an usual fold 22 between the cushion 14 and the backrest 16 of the seat 11.

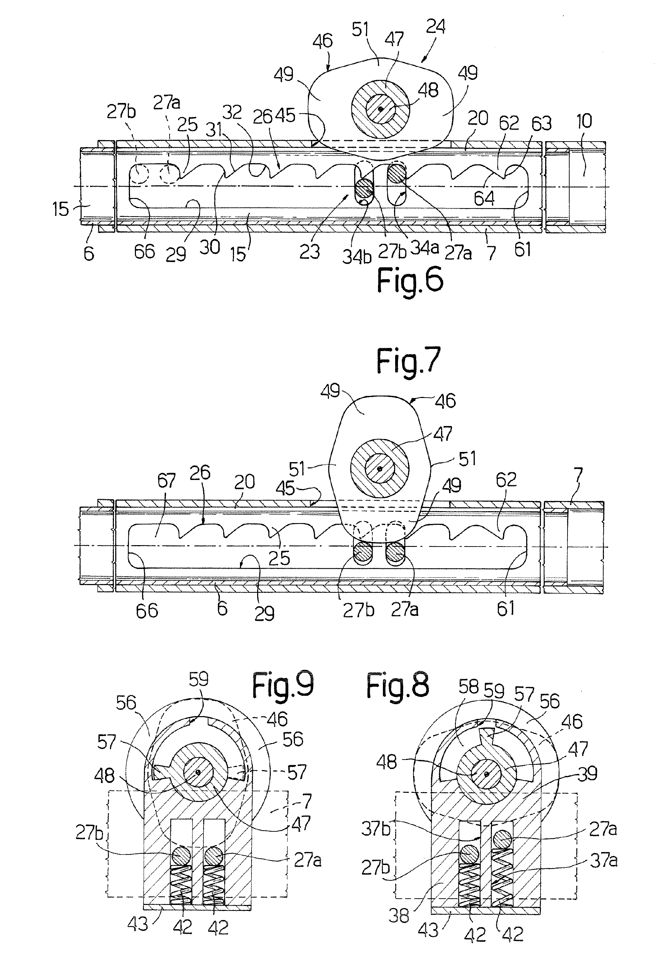

The coupling system 5 between each bar 6 and the respective slide 7 comprises multiple step-adjustable means 23 (Figures 4 and 6) and a release device, generically designated by 24, operable to release slide 7 from bar 6. Step-adjustable means 23 comprise a serrated edge 26 with saw teeth 25, and at least one step member 27 to engage a serrated edge 26. In particular, each vertical wall 15 of the bar 6 is provided with a longitudinal opening 29 upperly defined by the serrated edge 26. The saw teeth 25 of the edge 26 have a predetermined pitch and present each a substantially vertical rear flank 30, and a sloped front flank 31. The front flank 31 of a tooth 25 is connected to the rear flank 30 of the adjacent tooth 25, through a straight section and a circular arc union 32 having a predetermined radius.

The two serrated edges 26 of each bar 6 are in fact engaged by two different step members, formed by two pins 27a and 27b, common to the two serrated edges 26. Each pin 27a, 27b has a diameter corresponding to the radius of the union 32, and it is slidable in two vertical slots 34a and 34b, carried by the walls 10 of the section of the slide 7. The vertical axes of the two slots 34a and 34b have a reciprocal distance which is equal to half of the pitch of the saw teeth 25 of the serrated edge 26.

Furthermore, each pin 27a and 27b is vertically guided by a corresponding pair of vertical guides associated to the pair of slots 34a and 34b, and formed by a pair of grooves 37a and 37b (see also Figures 8 and 9). The grooves 37a, 37b are carried by two arms 38 of a bracket 39 rigidly fastened onto the slide 7. Each pin 27a, 27b is biased towards the serrated edge 26 by a corresponding helical compression spring 42, housed in the corresponding groove 37a, 37b. Each spring 42 is withheld laterally by the corresponding vertical wall 10 of the slide 7, and axially by a lower plate 43 closing the grooves 37a, 37b.

The release device 24 (Figures 2, 4 and 6) comprises for each slide 7 a cam 46 carried by bracket 39 and adapted to act through an opening 45 on a third wall of the slide section 7, to disengage the two pins 27a, 27b. In particular, the two cams 46 are each provided with a hub 47 fitted on a common shaft 48, which is rotatable on the arms 38 of the two brackets 39.

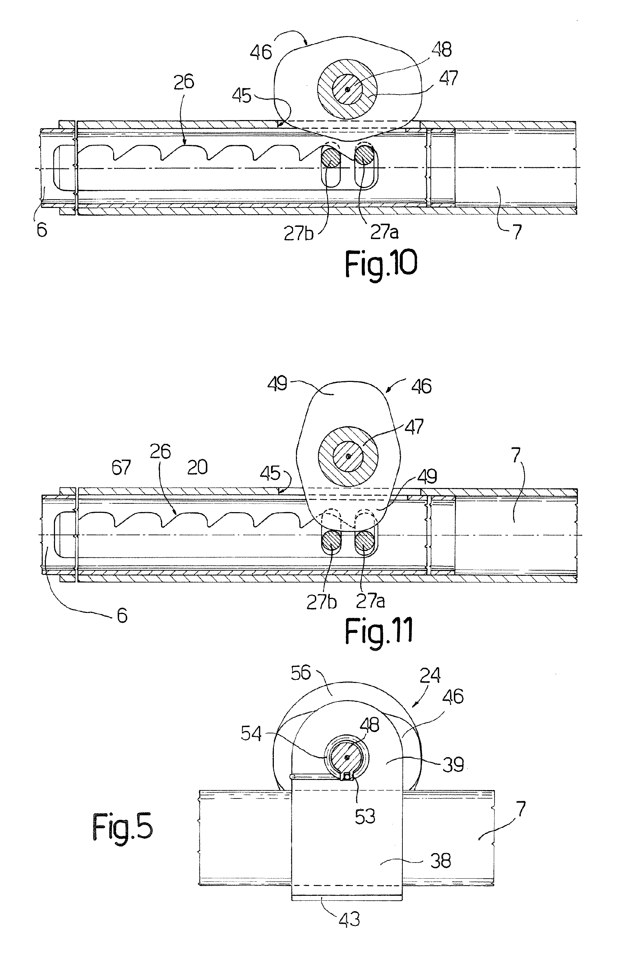

Each cam 46 presents two diametrically opposite lobes 49, forming two high sections, which are separated by two low profile portions 51. When the cam 46 is arranged with the low profile portion 51 towards the pins 27a, 27b, as shown in Figures 6 and 10, it does not effect the pins themselves, whereby the latter, biased by the springs 42, engage the serrated edges 26 of the respective bar 6. On the other hand, when the cam 46 engages the pins 27a, 27b with a lobe 49, they are simultaneously disengaged from the two serrated edges 26, as shown in Figures 7 and 11, whereby the slide 7 can freely slide on the bar 6.

Furthermore, the shaft 4 is angularly and elastically connected to the two brackets 39. In particular, between an arm 38 of one of the brackets 39 (Figures 3-5) and an appendix 53 of the shaft 48 there is arranged such a torsion spring 54 capable of normally holding the cams 46 in a home position, with one of the two low profile portions 51 at the pins 27a, 27b. Moreover, the torsion spring 54 is adapted to return the shaft 48 and the cams 46 automatically to the home position, when the shaft 48 has been turned in either one or the other direction of rotation with respect to such home position. For this purpose, one end of the shaft 48 adjacent to the bracket 39 carries the torsion spring 42.

Finally, the hub 47 of each cam 46 is provided with two radial appendixes 57, housed in corresponding compartments 58 of the two arms 38. Each appendix 57, in cooperation with a slit 59 in the corresponding compartment 58, allows to visually check whether the cams 46 are in the home position, that is whether the coupling of the slides 7 with the bars 6 is locked.

Moreover, the coupling 5 between each slide 7 and the corresponding bar 6 comprises front end-of-stroke stopping means and rear end-of-stroke stopping means 62. In particular, the front end-of-stroke stopping means comprise a front edge 61 (Figure 6) of each opening 29 in the walls 15, which is adapted to stop the corresponding pin 27a. Each front edge 61 is associated to an additional saw tooth 62 oriented in the opposite direction of the saw teeth 25, such that a front flank 63 parallel to the edge 61 locks the pin 27a in the end-of-stroke position on the slide 7. In this way, in the end-of-stroke position the backward movement of the slide 7 towards the rear is also locked, therefore the slide remains locked in both directions of movement.

On the other hand, a rear flank 64 of the saw tooth 62 is sloped and forms with flank 31 of the adjacent saw tooth 25 a reversed V-profile. When the pin 27b engages this V-profile, biased by the corresponding springs 42, it facilitates the elastic movement of the slide 7 towards the front end-of-stroke position, whereby the V-profile, along with the pin 27b, acts as a spring positioner.

The rear end-of-stroke stopping means comprise a rear edge 66 (Figures 6 and 7) of each opening 29 in the walls 15 of the bars 6. The edges 66 are adapted to stop the corresponding pin 27b in the rear end-of-stroke position, designated by dashed lines in Figure 6. The edge 66 forms, with the flank 30 of the adjacent saw tooth 25, such a compartment 67 also capable of housing the pin 27a in end-of-stroke position. As this pin 27a thus engages the flank 30 of the adjacent saw tooth 25, in the rear end-of-stroke position the backward movement of the slide 7 towards the front is prevented, whereby the slide 7 remains locked in both directions of movement.

The anchoring of the support 8 of the child safety seat 9 on the seat 11 is carried out as follows.

Normally, the cams 46 are arranged in the home position in Figures 6, 8 and 10, whereby one of the pins 27a, 27b engages the flank 30 of a tooth 25, while the other substantially engages the sloped side 31 of the same tooth 25, or of the adjacent tooth 25. To anchor the support 8, knob 56 is first turned by 90°, in either one or the other direction with respect to the home position. In this way, one of the lobes 49 of the two cams 46 engages both pins 27a and 27b, disengaging them from toothing 26, as shown in Figures 7, 9 and 11. By gripping the front crosspiece 12, the support 8 is now moved forward with respect to the two bars 6, as designated in dotted lines in Figures 1 and 2. In this position, the support 8 is in the front end-of-stroke position, whereby letting go of the knob 56, the two pins 27a and 27b lock the support 8 in both directions of movement, as shown in Figure 10.

By now resting the support 8 on cushion 14 of the seat 11, the two hook ends 17 of the two bars 6 can be anchored on the pins 19 of the fixed supporting members 18. Turning the knob 56 again, the pin 27a is now disengaged from the side 63 of the tooth 62 of each serrated edge 26, whereby the support 8 can be freely shifted with respect to the bars 6. After moving the support 8 by at least half a pitch of the serrated edge 26, the knob 56 can be let go of making the pins 27a and 27b engage the serrated edges 26 again.

The movement of the support 8 towards the backrest 16 can now be carried out by making the two pins 27a and 27b bounce on the teeth 25 until the child safety seat 9 rests against the backrest 16 of the seat 11. In such position, the pins 27a and 27b lock each frontward movement of the support 8, whereby the anchoring of the child safety seat 9 to the seat 11 is extremely safe. Preferably, the bars can be dimensioned such that, as the seat 9 rests against the backrest 16 of the seat 11, the pins 27a, 27b are in the rear end-of-stroke position.

The advantages of the coupling system 5 between the first and second member 6, 7 according to the invention, with respect to known coupling systems, are apparent from the foregoing description. In particular, the coupling system 5 allows a step-adjustment of the position of the slide 7, with two end-of-stroke positions locked in both directions. Furthermore, the knob 56 allows an easy release of the coupling 5, which is automatically activated simply by releasing the knob 56.

It will be understood that changes and variations can be implemented to the described coupling system without departing from the scope of the claims. For example, it may comprise only one slide 7 and only one serrated edge 26. Furthermore, the knob 56 can be replaced by a lever provided with a spring for the automatic return to home position. Finally, the coupling system may be used in other applications than safety seats for transporting children.

## Claims

1. A coupling device (5) for coupling in a step-slidable manner a first member (6) and a second member (7) of a system for anchoring a child safety seat (9) to a motor vehicle seat (11), said coupling system (5) comprising step-adjustable means (23) of the position of said second member (7) relative to said first member (6); **characterised in that** said step-adjustable means (23) comprise a serrated edge (26) with saw teeth (25), which is adapted to be engaged by at least one step member (27a, 27b); said serrated edge (26) and said step member (27a, 27b) being carried one by said first member (6) and the other by said second member (7); said step-adjustable means (23) further comprising a release device (24) carried by either one of said first and second members (6, 7) and manually operable to release said first and second members (6, 7).

2. A coupling system according to claim 1, **characterised in that** said first member comprises a bar (6) formed by a rectangular section having two parallel walls (15), said serrated edge (26) being carried by an opening (29) arranged on each of said parallel walls (15).

3. A coupling system according to claim 2, **characterised in that** said second member (7) is formed by another rectangular section arranged outside the section forming said bar (6) and longitudinally slidable with respect to it, said step member (27a, 27b) being adapted to simultaneously engage the serrated edges (26) of said openings (29).

4. A coupling system according to claim 3, **characterised in that** said step member (27a, 27b) is slidable on said second member (7) in a guide (34a, 34b) perpendicular to the movement direction of said second member (7).

5. A coupling system according to claim 4, **characterised in that** said step-adjustable means (23) comprise a pair of step members (27a, 27b) movable on two independent guides (34a, 34b) carried by said second member (7), said guides (34a, 34b) being spaced apart substantially by half of the pitch of said saw teeth (25).

6. A coupling system according to claim 5, **characterised in that** said other section presents two parallel walls (10) in engagement with the parallel walls (15) of said bar (6), each of said step members being formed by a cylindrical pin (27a, 27b) slidable in two slots (34a, 34b) carried by the parallel walls (10) of said other section, each of said pins (27a, 27b) being pushed in engagement with said serrated edges (26) by at least one compression spring (42).

7. A coupling system according to claim 6, **characterised in that** said pins (27a, 27b) are carried by two arms (38) of a bracket (39) fastened on said other section, each of said arms (38) having a pair of housings (37a, 37b) for one end of said pins (27a, 27b), each of said housings (37a, 37b) being also adapted to house a corresponding compression spring (42).

8. A coupling system according to claim 7, **characterised in that** said release device (24) comprises a cam (46) carried by said bracket (39) and normally arranged in a home position in which it does not affect said pins (27a, 27b), said cam (46) being operable to disengage said pins (27a, 27b) from said serrated edges (26).

9. A coupling system according to claim 8, **characterised in that** said cam (46) acts on said pins (27a, 27b) via an opening (45) of said other section and a longitudinal groove (20) of the section of said bar (6).

10. A coupling system according to claim 9, **characterised in that** said cam (46) is connected to a control member (56) carried by said bracket (39), said control member (56) being adapted to be automatically returned to home position.

11. A coupling system according to claim 10, **characterised in that** said control member is formed by a knob (56) integral with said cam (46), said knob (56) being adapted to be rotated by a certain angle in either direction of rotation, a torsion spring (53) being provided to return said knob (56) and said cam (46) to said home position.

12. A coupling system according to claim 11, **characterised in that** end-of-stroke stop means (61, 66) are provided between said first (6) and said second (7) member; said end-of-strike stop means (61, 66) comprising a first end-of-stroke stop (61) for said second member (7), said first end-of-stroke stop (61) being adapted to prevent the disengagement of said second member (7) from said first member (6).

13. A coupling system according to claim 12, **characterised in that** said first end-of-stroke stop (61) is adapted to stop a first of said pins (27a, 27b) and is arranged so as to allow the other of said pins (27a, 27b) to prevent a backward movement of said second member (7).

14. A coupling system according to claim 13, **characterised in that** said first end-of-stroke stop is formed by another edge (61) of the opening (29) carrying said serrated edge (26), said other edge (61) being associated to an additional saw tooth (62) oriented so as to allow said first pin (27a) to block said backward movement.

15. A coupling system according to claim 14, **characterised in that** said additional saw tooth (62) is adapted to be engaged by said other pin (27b) to elastically push said second member (7) into the corresponding end-of-stroke position.

16. A coupling system according to any of the claims from 12 to 15, **characterised in that** said end-of-stroke stop means (61, 66) comprise a second end-of-stroke stop (66) adapted to stop said other pin (27b), said second end-of-stroke stop (61) being positioned so as to allow said first pin (27a) to block the backward movement of said second member (7).

17. A system for anchoring a child safety seat (9) to a motor vehicle seat (11), comprising at least one first and one second member (6, 7), and a coupling system (5) for coupling in a step-slidable manner said first and second members (6, 7) together, according to any of the preceding claims.

18. An anchoring system according to claim 17, **characterised in that** it comprises a pair of said second parallel members (7) coupled in a step-slidable manner to a pair of said first members (6), and **in that** said second members (7) are connected by at least one first crosspiece (12) and said first members (6) are connected by a second crosspiece (13), each of said first members (6) presenting a hook end (17) adapted to be anchored onto a matching member (18) carried by said seat.

19. An anchoring system according to claim 18, **characterised in that** said matching member (18) is arranged in the usual fold (22) between a cushion (14) of said seat (11) and the respective backrest (16).

20. A child safety seat for a motor vehicle **characterised in that** it comprises an anchoring system according to any one of the claims from 17 to 19.
